# EUROPEAN PATENT SPECIFICATION

(11) **EP 1 873 641 B1**
(45) Date of publication and mention of the grant of the patent: **19.08.2009**
(21) Application number: 06013461.6
(22) Date of filing: 29.06.2006
(51) Int. Cl.: G06F 11/14, G06F 1/30

(54) **Compression method for managing the storing of persistent data from a non volatile memory to a backup buffer**
Komprimierungsverfahren zur Verwaltung der Speicherung von persistenten Daten eines nichtflüchtigen Speichers in einen Sicherungspuffer
Procédé de compression de gestion du stockage de données persistantes d'une mémoire non volatile dans une mémoire de sauvegarde

(43) Date of publication of application: 02.01.2008
(73) Proprietor: Incard SA, 1204 Plan-Les-Ouates (Geneva) (CH)
(72) Inventor: Sepe, Paolo, 80010 Quarto (Napoli) (IT); Di Cosmo, Luca, 81017 S. Angelo D'Alife (Caserta) (IT)
(74) Representative: Ferrari, Barbara

(56) References cited:
- EP-A2- 0 376 488
- US-B1- 6 301 675

## Description

### Field of Application

The present invention relates to a compression method for managing the storing of persistent data from a volatile memory device to a Backup buffer comprising a plurality of Backup entries before the execution of at least one update operation that involves the persistent data.

More particularly, the present invention relates to a compression method of the type indicated above wherein, if an unexpected event occurs, the value of the persistent data involved in the at least one update operation are guaranteed to be restored in a consistent state from the Backup buffer.

### Background of the Invention

As it is well known a non volatile memory, such as a Flash memory or an EEPROM memory, is used in an electronic device to store non volatile data. Such non volatile data are also indicated as persistent data because their content may be variable during the programming phases of the electronic memory device but their values must be preserved during the power off.

More particularly, the non volatile memory assures that the value of persistent data is not lost after a regular switch-off of the electronic device, i.e. when the electrical deactivation occurs in an idle state of the device. This is the typical case wherein the deactivation is driven by an operative system of a terminal which the device is connected to or directly belonging to the electronic device.

On the other hand, if an accidental electrical deactivation occurs during an application execution, specifically during an updating operation of persistent data, it is possible that the value of persistent data is left in an inconsistent state, that could compromise, completely or partially, the functioning of the electronic device in the successive power-on sessions.

From the document EP 0 376 488, it is known a method of performing a secure update of the non-volatile memory, while maintaining persistent data in a consistent state in a backup memory in case of an unexpected power loss by storing the start address in a non-volatile memory prior to an update of the non-volatile memory.

From the document US6301675 it is known a secure update of data stored across multiple disks in a RAID to ensure consistency in data in case of an interrupted update operation, whereby an update table is stored in each storage device indicative of an update operation having been commenced to the storage units of said storage disk, whereby said update table is used to assess what storage units were not properly terminated in case of an unexpected interrupt during the update operation.

A prior art document, the patent EP 0 964 360, relates to a method for supplying power to an integrated circuit cards, comprising a microprocessor, a volatile memory (RAM) and a non volatile memory (ROM, EEPROM), in case of unexpected power off.

This solution try to overcome the above problem always keeping the power supply to the memory device.

A second prior art document US 2005/0055498 relates to an integrated circuit card comprising failure protection means for maintaining power in case of a power supply failure and a power failure detector for sensing a corresponding power supply failure.

In any case, those prior art documents disclose methods based on giving additional power to the electronic device for concluding sensible operations before the unexpected switch off of the device but they don't consider a transaction method, that is more indicated for storing persistent data also in case of other unexpected events, for example not determined by a power off.

Anyway, the value of persistent data may be preserved according to other methods that substantially copy it in a Backup buffer during the execution of an arbitrary number of writing operations. More particularly the arbitrary number of writing operations are considered a single atomic writing operation with respect to unexpected events, comprising a power off.

The arbitrary number of writing operations so grouped may be considered a "Secure Update" because the value of the persistent data they process are guaranteed to be restored in a consistent state from the Backup buffer, after an unexpected events.

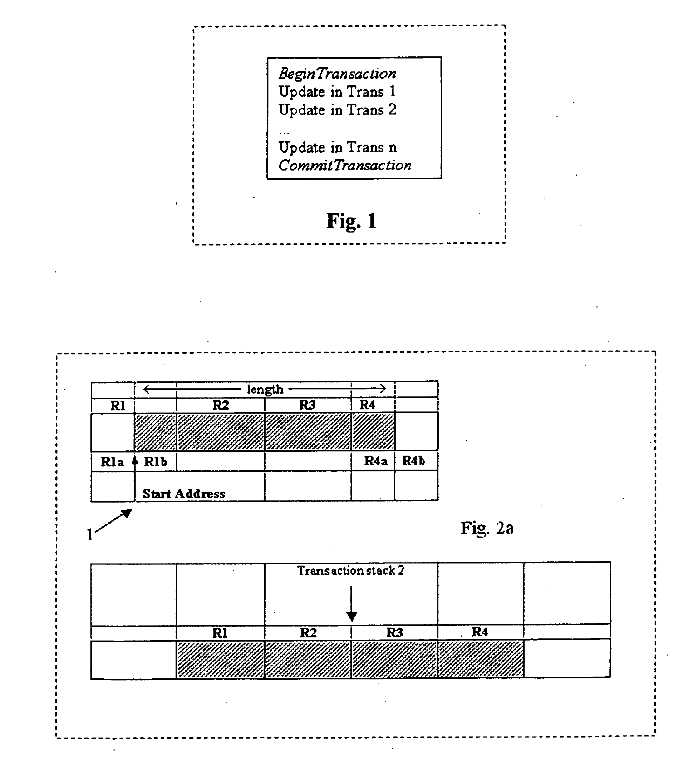

Generally, these methods mark a plurality of writing operations involved in a "Secure Update" between a first and a second pseudo-instruction, respectively BeginTransaction and CommitTransaction, as schematically shown in Figure 1.

In case of unexpected events during the execution of an operation included between said Begin Transaction and Commit Transaction, the value of the persistent data are restored in the non volatile memory, at next device start-up, to the value they had before the Begin Transaction instruction.

More particularly, the method is based on a Backup buffer, that is a portion of non volatile memory, wherein the value of persistent data are stored before the starting of a Begin Transaction instruction. If an unexpected event occurs, the initial-consistent value of persistent data are retrieved from the Backup buffer and restored in the non volatile memory.

At the state of the art, the non volatile memory allows a limited number of writing accesses. Over this limit, the "data retention time" of the non volatile memory decreases to values not acceptable for any applicative purpose. For example, the number of the allowed writing operations for EEPROM or Flash memories is typically in the range of 100.000 to 1.000.000.

This limitation has impact on the implementation of the method for driving the Backup buffer, as any "Secure Update" involving a number of secure writing operation has the side effect of a further writing in the Backup buffer.

Moreover, depending on how the method drives the storing of persistent data inside the Backup buffer, different write operations may stress some bytes of the Backup buffer more than others. In other words, different portion or bytes of the Backup buffer could be used not uniformly.

So, the maximum number of writing operations on such particularly stressed bytes bounds the number of the "Secure updating" operations allowed to the applications on the non volatile memory. Even if the device is guaranteed for 100.000 writing operations on each single byte of the non volatile memory, the electronic device cannot perform more than 100.000 "Secure updating", even on different memory bytes, because in opposite case, the bytes already stressed of the Backup buffer could be damaged.

Moreover, the state of the art non volatile memory, such as Flash memory devices and several EEPROM memory, are based on a plurality of memory regions, each comprising a number of bits defining its granularity.

More particularly, it is not possible to erase single bits within a memory region, the erasing of single or several bits within a memory region requiring the erase of the whole region they belongs to for granularity issue of the memory region. The same problem affects the updating operation because in such memories a writing operation requires first an erase operation, to set the memory region in a "ready to be written" state.

So, when an unexpected event such as an accidental electrical power off occurs, because of the granularity issue, not only the bits involved in the actual write operation, but all the bytes that belongs to the memory regions involved in the update operation are affected by this problem.

More particularly, this problem should be faced not only during a "Secure Update" but also during a non-secure update, hereinafter indicated as "Non atomic update", in other words when it is not required that all the operations involved in such update are considered as a single atomic operation.

With reference to figure 2a, a non volatile memory 1 is schematically shown, comprising a plurality of memory portions R1, R2, R3, R4. During a "Secure Update" instruction, memory portions R1, R2, R3 and R4 are involved in a writing operation. Such writing operation affects, for example, persistent data stored in memory sub-regions R1b of the portion R1 and R4a of the portion R4.

The location containing persistent data to be update is pointed by a "Start address" pointer and has size equal to "Length". The method that drives the Backup buffer must preserve the entire memory portions R1, R2, R3 and R4, storing all its content in a Backup buffer, even if the writing operation does not affect the whole regions R1 and R4 but only the sub-regions R1b, R4a. Memory regionsR1 and R4 must be preserved completely because the writing operation requires an erase operation on them, due to granularity issue.

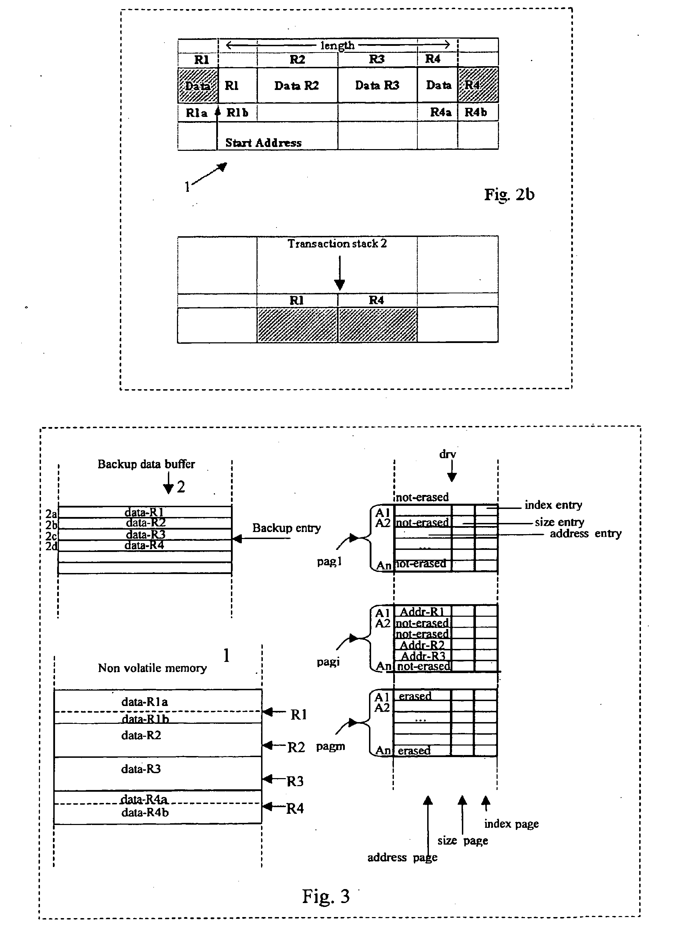

Figure 2b, schematically shows the same non volatile memory 1 wherein a "Non atomic Update" is performed. Also in this case memory portions R1, R2, R3 and R4 are involved in a non atomic writing operation that affects persistent data stored in a location represented by memory sub-region R1b, memory regions R2 and R3, and memory sub-region R4a.

Also in this case the method that drives the Backup buffer preserves memory portions R1 and R4 because sub-regions R1a and R4b, even if not directly involved in the writing operation, must be preserved. Vice versa, regions R2 and R3 are not preserved. In fact, while the value involved in the "Non atomic update" and stored in the non volatile memory could be deliberately left in a partially modified state because not belonging to a "Secure Update", it is not acceptable that the same happens for adjacent bits that are involved in the memory portions erasing only for granularity issue.

So, both "Secure Update" and "Non-atomic update" operations would require a method for preserving persistent data against possible unexpected events occurred during update operations, determining an intensive use of the Backup buffer.

For those reasons, the intensive use of the Backup buffer may determine the failure of an update operation due to out of memory reason, because the Backup buffer space is non sufficient to store all the memory regions.

The problem at the basis of the present invention is that, being the Backup buffer a portion of non volatile memory with a limited size and being driven by a method that stores in it persistent data during both "Secure Update" and "Non atomic update", the execution of a plurality of secure update operations may overflow its size, especially because the Backup buffer must preserve a plurality of memory portions for their potential restoring in non volatile memory, not only during atomic updates but also during non atomic updates that involve, for granularity issue, the erasing of persistent data that cannot be left in non consistent state. Another problem of the present invention is that a lot of erase/write operations inside the Backup buffer, intended to release its Backup entries for avoiding overflow, may limit the life-time of the Backup buffer. At the moment the prior art does not provide any specific solution to solve this problem.

### Summary of the invention

The solution idea on which the invention is based is that of providing a compression method that releases as soon as possible a Backup buffer entry that is no more involved in an update operation in order to re-use it, without limiting the life cycle of the Backup buffer with frequent erase/ re-write operation of the released entry.

This problem is solved, according to the present invention, by a compression method as previously indicated and defined by the characterising portion of the enclosed claim 1.

The features and advantages of the invention will be apparent from the following description of an embodiment thereof, given by way of non-limitative example with reference to the accompanying drawings.

### Brief Description of the drawing

Figure 1: schematically shows a couple of [BeginTransaction and CommitTransaction] instructions grouping a set of update operations, according to the prior art.
Figure 2a: schematically shows a set of adjacent memory portions of a non volatile memory device which are involved in a "Secure Update" procedure, according to the prior art.
Figure 2b: schematically shows a set of adjacent memory portions which are involved in a "Non atomic update" procedure, according to the prior art.
Figure 3: schematically shows a Backup buffer and a driver buffer according to the present invention;
Figures from 4a to 4i: schematically show the content of Index, Address and Length buffers during the execution of [BeginTransaction and CommitTransaction] instructions, according to the present invention.

### Detailed description

With more specific reference to figure 3 it is shown and is globally indicated with 1 a non volatile memory device comprising a plurality of memory portions R1-R4 that are provided for storing persistent data data-R1..data-R4, respectively. In the same figure it is also represented a Backup buffer 2, comprising a plurality of Backup entries 2a-2d for storing the persistent data data-R1..data-R4 during update operations op1, op2.

More particularly, during the execution of such update operations op1, op2, a compression method drives the storing of persistent data data-R2, data-R3 contained in memory portions R2, R3 inside the Backup entries 2a, 2b of the Backup buffer 2.

More particularly, an address Addr-R2, Addr-R3 wherein the memory portions R2, R3 are stored in non volatile memory 1 is recorded in an address entry A1, A2 included in an address page pag1 of a driver buffer drv.

The driver buffer drv comprises a plurality of address pages pag1, pag2, pagm, each one sized equal or multiple of the non volatile memory granularity and each one including a plurality of address entries A1, An. The compression method provides that the address entries inside the address buffer are written in a circular way, starting from the first address entry A1 of the first address page pag1 to the last address page An of the last address page pagn.

When the last address entry An of the last address page pagm is reached, the compression method driving the backup buffer and the driver buffer erase the content of the first address page pag1(entries A1-An) if all of its entries are erasable and restart cyclically to write the address buffer.

According to the present invention, the compression method provides a set of functions for performing non-atomic updates without failures, even if they are required when the end of the backup buffer is reached and the content of the first address entry A1 of the first address page pag1 is not ready to be written. In other words, the compression method is designed for avoiding overflow when non-atomic update operations are required while a secure update operation is in progress.

A first function provides to mark as erasable an address entry, for example the address entry A2, included in an address page pagi of the driver buffer drv, when the whole update operation op1, op2 is completed.

More particularly, an address entry A2 is referred to a memory portion R2 whereon an update operation has already been completed and so it has been marked as non-erasable. On the contrary the address entry A 1 is referred to a memory portion R1 whereon an update operation has not been already completed. So while the address entry A2 could be discarded to release space inside the address buffer and inside the Backup buffer for following update operations, the address entry A1 is not flagged as erasable because it still refers to a memory portion to be updated.

A second function provides the copying from a first address page pag1 to a second address page pag2 of the driver buffer drv of a plurality of address entries not marked as erasable or not-erasable to the second address page. Thus, since the second address page was only made of ready to be written pages, after the copy it will contain only address entries not marked as erasable and entries that are ready to be written.

More particularly, the second address page is used to store all the address entries that still refer to memory portions to be updated but that are stored inside an address page pag1 also containing address entries to be erased.

A third function allows to erase the first address page, rendering it ready to be written, to write the content of the second address page into the first, and to erase the second address page.

The final goal is to compact the required entries and to release all the no more required entries from an address page in order to use them for future update operations.

Advantageously, the compression method drives the erasing operation of a plurality of address entries ready to be erased, more particularly erasing all the address entries stored in an address page.

More particularly, the compression method further comprises a function for copying said second address page pag2 of said driver buffer drv into said first address page pag1.

The compression method also provides:
- a push instruction, for reading the persistent data data-R1, data-R2, data-R3, data-R4 from the non volatile memory 1 device and storing them in one or more Backup entries of the Backup buffer 2, for example in Backup entries 2a, 2b, 2c, and 2d.
- a pop instruction, for reading the persistent data data-R1, data-R2, data-R3, data-R4 from the Backup entries 2a, 2b, 2c, and 2d and restoring them in the corresponding memory portions R1, R2, R3, R4 of the non volatile memory 1.
- a begin transaction marker to indicate that one or more update operations are starting and that such one or more update operations should be considered as a single atomic update.
- a commit transaction marker to mark that one or more of said update operations has finished.

More particularly, the driver buffer drv comprises all the information needed to recover persistent data inside the non volatile memory 1 in a consistent state: non only the value of the persistent data inside the non volatile memory 1 device and its address but also its size.

When a "Secure update", for example involving memory portions R 1 b, R2, R3, R4a is requested, the compression method calls a push instruction for storing inside the Backup buffer 2 the information related to the memory regions R1, R2, R3, R4, being all of these memory regions involved in the update operation.

Also when a "Non atomic update" is requested, the compression method, calls a push instruction for storing inside the Backup buffer 2 only the memory regions R1, R4 of the memory regions R1, R2, R3, R4.

When an update operation requires the storing of persistent data inside the backup Buffer, the compression method initialize a begin transaction marker for establishing that, in case of unexpected events, all the persistent data involved in such update operation must be restore to the value they had before the initialization of the begin transaction marker.

More precisely, the compression method firstly checks if the Backup buffer 2 is currently marked by a begin transaction marker, for example opened by a secure update previously called. In this case, the compression method pushes the memory portions R1 and R4 inside the Backup buffer 2, it performs the "Non atomic update" and finally it discards the related records from the Backup buffer 2, since the "update non-atomic" has been completed.

Vice versa, if a Backup buffer 2 is not currently marked by a begin transaction marker, the compression method adds a backup entry on the Backup buffer 2 and then it proceeds as previously described.

After the execution of the update operation the compression method closes the currently opened transaction since it has been opened only to manage the "Non-atomic update".

Advantageously, the driver buffer drv according to the present invention comprises structured information about the persistent data to be stored in the Backup buffer, in particular their Address, Length and Index inside the Backup buffer.

Advantageously, the driver buffer drv may comprise a plurality of buffers, for example a buffer dedicated to store the Address that persistent data have in non volatile memory device, another buffer dedicate to store their size and a third buffer to store their index or address inside the Backup buffer.

The compression method guarantees a circular use of the three buffers so to maximize the lifetime of the corresponding non volatile memory as well as a circular use of the Backup buffer.

The length of the backup entries inside the Backup buffer is equal or multiple of the granularity of the non volatile memory 1, so that the updating of a single backup entry doesn't require the erasing of adjacent backup entries. More particularly, the Backup buffer contains the original value of the persistent memory to be restored in case of abort during an update operation. The portion of the entry that must be restored is identified by means of Address-Length.

Index buffer comprises a plurality of index entries and links Address-Length entries inside Address-Length buffers to Backup entries inside Backup buffer. More particularly, the Index buffer provides that the same Backup entry can be related to more update operations, guaranteeing the reuse of Backup buffer. Advantageously, a Backup entry is conserved as long as possible, because it may be reused inside a same transaction without additional re-writing that limits the life time of non volatile memory 1.

In order to extend the lifetime of non-volatile memory 1, it is important to guarantee the circularity in all the four buffers. Since Index, Address and Length buffers are substantially aligned, their circularity is guaranteed by means of markers in Index buffer. Those markers allow to track the last used entry in Index buffer and consequently the last used entry in Address and Length buffers.

Circularity of Backup buffer, instead, is guaranteed saving in Index buffer the last used position of Backup buffer. Moreover, before closing a transaction the last position used is saved too.

Unlike the update of Backup entries, update of Index, Address, Length entries must take into account the memory granularity, since the length of a single entry cannot be a multiple of granularity for wasting of memory space reason.

Advantageously, the size of the Index, Address, and Length pages are always equal or multiple of memory granularity, so that Index, Address and Length buffers are composed by an integer number of granularity pages. Each page can be completely erased without touching the rest of the buffer.

More particularly, when an index value must be written in an index entry within an Index page, we can distinguish two cases:
a) the index entry is available for the writing, for example because it has been already erased;
b) the index entry is not available for the writing, for example because the index entry is not erased.
   In the first case, no erase operation is needed but only a simple write operation shall be performed to store the new index value. In the second case, if possible, the whole Index page and the corresponding Address and Length pages shall be erased to make them available for writing.
   Supposing that non persistent memory granularity is 4-bytes, erased element is 0x00 and consequently not erased element is 0xFF the compression method may provide:
c) a Backup Entry size of 64 bytes, an Index, Length entry size of 1 byte and an Address entry size of 4 bytes;
d) an Index Page size of 4 bytes, the minimum value for allowing a safe page erasing,
e) a Length Page size of 4 bytes long to guarantee the correspondence with Index Pages;
f) an Address Page size of 4*4 bytes to guarantee the correspondence with Index Pages.

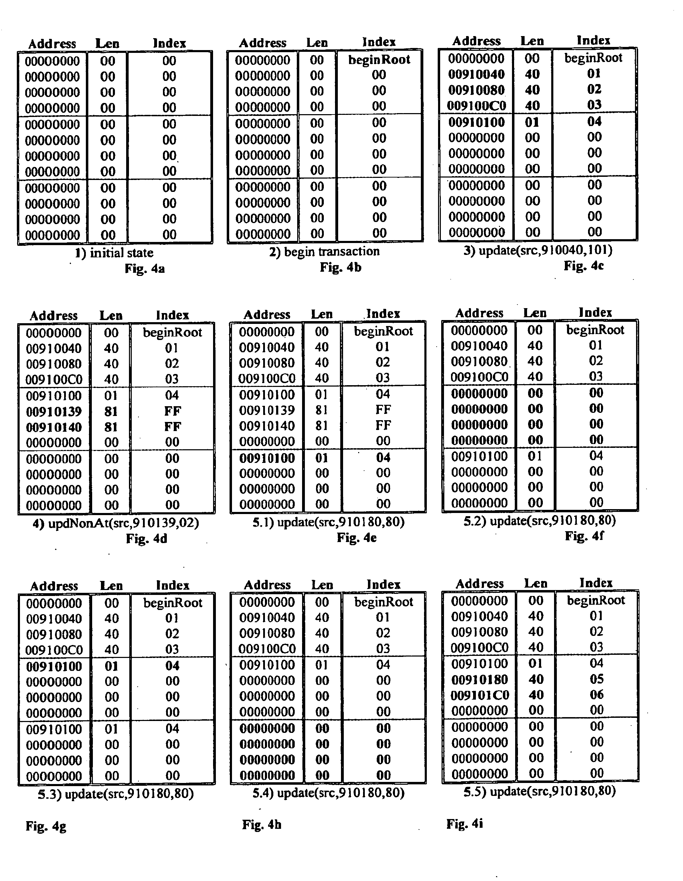

The core of the compression method takes place in Index Buffer, which is represented with Address and Length buffers in figures 4a-4i as an example of execution of an update operation.

More particularly, the following features of the compression method, should be noted:
In figure 4e an update operation cannot utilize the two address entries discarded in the address buffer since they are set to the "not erased state". So, the next page is driven by the compression method as a backup address page for doing the compression.
In figure 4f, since a backup of valid address entries has happened inside the backup address page of the address buffer, the Index, Address and Length entries used for the corresponding update operation can be erased.
In figure 4g the valid address entries saved in the backup address page arewritten in the address page just erased.
In figure 4h the backup address page is erased, releasing all its entries for following writing operations.
In figure 4i the real update operation occurs.

Advantageously, the compression method according to the present invention allow to drive the backup buffer for the storing of persistent data involved in update non-atomic operations and, when a transaction due to a nested update operation and filing some entries of the Backup buffer is closed, it releases resources to previous transaction.

Moreover, the compression method is circular since next address pages to a current address page are used as backup address pages.

Advantageously, the compression method is invoked only when a push operation requires a new address page: before changing the address page, a check on the current address page is done to verify if discarded address entries are present.

## Claims

1. Compression method for a driver buffer (drv) comprising address pages (pag1, pag2) including a plurality of address entries (A1, An), each entry being erasable together with all the entries of a same page and separately writable for storing an address of a backup entry (2a, 2b) in which backup entry (2a, 2b) data involved in an update operation (op1) are saved, **characterized by** comprising the steps of:
a) marking as erasable address entries of a first address page (pag1) when the update operation (op1) on data saved in the corresponding backup entry is completed;
b) copying, from said first address page (pag1) to a second address page (pag2) the address entries not marked as erasable;
c) erasing said first address page (pag1), rendering it ready to be written.

2. Compression method according to claim 1 further comprising the step of copying said second address page (pag2) of said driver buffer (drv1) into said first address page (pag1) or into an address page ready to be written.

3. Compression method according to claim 1 wherein all the entries stored inside said second address page (pag2) are not marked as erasable.

4. Compression method according to claim 1 wherein said address pages (pag1, pagm) have a size equal or multiple to the size of a memory portion of said data saved in the backup entries.

5. Compression method according to claim 1 wherein said address entries also comprises a length entry storing the length of said data.

6. Compression method according to claim 5 wherein said address entries also comprises an index entry for linking said address (A1) and length entries to said backup entries (2a).

7. Compression method according to claim 6 wherein a plurality of said index entries are grouped into an index page.

8. Compression method according to claim 5 wherein a 9plurality of said length entries are grouped into a length page.

9. Compression method according to claim 8 wherein said plurality of index entries and said plurality of length entries are aligned to a plurality of address entries.

## Patentansprüche

1. Kompressionsverfahren für einen Treiberzwischenspeicher (drv), aufweisend Adressseiten (pag1, pag2), die eine Mehrzahl von Adresseinträgen (A1, An) enthalten, wobei jeder Eintrag zusammen mit allen Einträgen einer gleichen Seite löschbar ist und einzeln schreibbar ist, um eine Adresse eines Datensicherungseintrages (2a, 2b) zu speichern, wobei in dem Datensicherungseintrag (2a, 2b) Daten gespeichert werden, die an einer Aktualisierungsoperation (op1) beteiligt sind,
**gekennzeichnet durch** folgende Schritte:
a) Kennzeichnen einer ersten Adressseite (pag1) als löschbare Adresseinträge, wenn die Aktualisierungsoperation (op1) bei in dem entsprechenden Datensicherungseintrag gespeicherten Daten fertiggestellt ist;
b) Kopieren der nicht als löschbar **gekennzeichnet**en Adresseinträge von der ersten Adressseite (pag1) in eine zweite Adressenseite (pag2);
c) Löschen der ersten Adresseite (pag1), wobei sie darauf vorbereitet wird, geschrieben zu werden.

2. Kompressionsverfahren nach Anspruch 1, ferner aufweisend den Schritt des Kopierens der zweiten Adressseite (pag2) des Treiberzwischenspeichers (drv1) in die erste Adressseite (pag1) oder in eine Adressseite, die bereit ist, geschrieben zu werden.

3. Kompressionsverfahren nach Anspruch 1, wobei alle in der zweiten Adressseite (pag2) gespeicherten Einträge nicht als löschbar **gekennzeichnet** sind.

4. Kompressionsverfahren nach Anspruch 1, wobei die Adressseiten (pag1, pagm) eine Größe haben, die gleich der oder ein Vielfaches der Größe eines Speicherteils der in den Datensicherungseinträgen gespeicherten Daten ist.

5. Kompressionsverfahren nach Anspruch 1, wobei die Adresseinträge auch einen Längeneintrag aufweisen, der die Länge der Daten speichert.

6. Kompressionsverfahren nach Anspruch 5, wobei die Adresseinträge auch einen Indexeintrag zum Verknüpfen der Adresse (A1) und der Längeneinträge mit den Datensicherungseinträgen (2a) aufweist.

7. Kompressionsverfahren nach Anspruch 6, wobei eine Mehrzahl der Indexeinträge in einer Indexseite gruppiert ist.

8. Kompressionsverfahren nach Anspruch 5, wobei eine Mehrzahl der Längeneinträge in einer Längenseite gruppiert ist.

9. Kompressionsverfahren nach Anspruch 8, wobei die Mehrzahl von Indexeinträgen und die Mehrzahl von Längeneinträgen an einer Mehrzahl von Adresseinträgen ausgerichtet sind.

## Revendications

1. Procédé de compression pour un tampon pilote (drv) comprenant des pages d'adresses (pag1, pag2) incluant une pluralité de champs d'adresse (A1, An), chaque champ pouvant être effacé en même temps que tous les champs d'une même page et être écrit séparément pour mémoriser une adresse d'un champ de sauvegarde (2a, 2b) dans lequel sont sauvegardées des données de champ de sauvegarde (2a, 2b) impliquées dans une opération de mise à jour (op1), **caractérisé en ce qu'**il comprend les étapes suivantes :
a) marquer comme effaçables des champs d'adresse d'une première page d'adresses (pag1) lorsque l'opération de mise à jour (op1) portant sur des données sauvegardées dans le champ de sauvegarde correspondant est terminée ;
b) copier, depuis ladite première page d'adresses (pag1) vers une seconde page d'adresses (pag2), les champs d'adresse qui ne sont pas marqués comme effaçables ;
c) effacer la première page d'adresses (pag1), la rendant ainsi prête à être écrite.

2. Procédé de compression selon la revendication 1, comprenant en outre une étape de copie de la seconde page d'adresses (pag2) du tampon pilote (drv1) vers la première page d'adresses (pag1) ou vers une page d'adresses prête à être écrite.

3. Procédé de compression selon la revendication 1, dans lequel tous les champs mémorisés dans la seconde page d'adresses (pag2) ne sont pas marqués comme effaçables.

4. Procédé de compression selon la revendication 1, dans lequel les pages d'adresses (pag1, pagm) ont une taille égale ou multiple de la taille d'une partie de mémoire des données sauvegardées dans les champs de sauvegarde.

5. Procédé de compression selon la revendication 1, dans lequel les champs d'adresse comprennent un champ de longueur mémorisant la longueur des données.

6. Procédé de compression selon la revendication 5, dans lequel les champs d'adresse comprennent un champ d'indice pour relier les champs d'adresse (A1) et de longueur aux champs de sauvegarde (2a).

7. Procédé de compression selon la revendication 6, dans lequel une,pluralité des champs d'indice est groupée en une page d'indices.

8. Procédé de compression selon la revendication 5, dans lequel une pluralité des champs de longueur est groupée en une page de longueurs.

9. Procédé de compression selon la revendication 8, dans lequel la pluralité de champs d'indice et la pluralité de champs de longueur sont alignés sur une pluralité de champs d'adresse.
